# FASCICULE DE BREVET EUROPEEN

(11) **EP 2 303 558 B1**
(45) Date de publication et mention de la délivrance du brevet: **15.08.2018**
(21) Numéro de dépôt: 09784414.6
(22) Date de dépôt: 19.06.2009
(51) Int. Cl.: B29C 70/68, B29C 70/70, B29D 30/00, G06K 19/077

(54) **PROCEDE ET INSTALLATION DE FABRICATION D'UN COMPOSANT ELECTRONIQUE ENROBE DE GOMME**
VERFAHREN UND ANLAGE ZUR HERSTELLUNG EINER KAUTSCHUKBESCHICHTETEN ELEKTRONISCHEN KOMPONENTE
METHOD AND PLANT FOR MANUFACTURING A RUBBER-COATED ELECTRONIC COMPONENT

(30) Priorité: 23.06.2008 FR 0854148
(43) Date de publication de la demande: 06.04.2011
(73) Titulaire: Compagnie Générale des Etablissements Michelin, 63000 Clermont-Ferrand (FR)
(72) Inventeur: SEVAILLE, Alain, F-63510 Aulnat (FR); WIEL, Pierre, F-63200 Yssac-la-Tourette (FR)
(74) Mandataire: Roussy, Delphine
(86) Numéro de dépôt international: PCT/FR2009/051178
(87) Numéro de publication internationale: WO 2010/007283

(56) Documents cités:
- EP-A- 1 887 493
- EP-A1- 1 522 957
- WO-A-87/00820
- JP-A- 09 048 407
- US-A1- 2002 195 195
- US-A1- 2003 168 514

## Description

L'invention concerne la fabrication d'un organe comprenant au moins un composant électronique enrobé de gomme et destiné à être noyé dans un pneumatique ou solidarisé à sa surface.

Il est courant d'intégrer dans un pneumatique un composant électronique comprenant par exemple un transpondeur à identification par radiofréquence passif muni de deux antennes formant bipôle. Ce type de transpondeur est généralement désigné par le sigle anglais RFID. Un tel composant électronique peut stocker des données, par exemple relatives à la fabrication du pneumatique.

Pour améliorer la qualité de la transmission des données stockées dans le composant électronique, il est courant de l'enrober préalablement dans de la gomme. En effet, d'une manière générale, plus la constante diélectrique de la masse de gomme enrobant l'organe électronique est élevée, plus le signal électrique reçu et émis par l'organe électronique est atténué. Etant donné que les constantes diélectriques des gommes généralement utilisées pour la fabrication de pneumatiques sont élevées, la transmission des données est fortement améliorée dans le cas où la constante diélectrique de la gomme d'enrobage du composant électronique est faible. De préférence, la constante diélectrique de la masse de gomme d'enrobage est inférieure à 3 dans la gamme des fréquences UHF (supérieure à 300 MHz).

En outre, l'enrobage préalable du composant permet de le protéger lors de son stockage avant de le monter sur un pneumatique.

On connaît dans l'état de la technique divers procédés de fabrication d'un organe comprenant un composant électronique enrobé de gomme, notamment du document EP 1 887 493. L'invention a notamment pour but de proposer un nouveau procédé de fabrication simple et peu coûteux à mettre en oeuvre.

A cet effet, l'invention a pour objet un procédé, selon la revendication 1, de fabrication d'au moins un organe de pneumatique, destiné à être noyé dans un pneumatique ou solidarisé avec sa surface, cet organe comprenant au moins un composant électronique enrobé de gomme, dans lequel on met le composant en contact avec une première bande de gomme et on le recouvre par une seconde bande de gomme de manière à enrober le composant et en ce que les deux bandes défilent sensiblement à une même vitesse depuis une première zone dans laquelle les deux bandes sont disjointes vers une seconde zone dans laquelle deux faces respectives des deux bandes sont en contact l'une avec l'autre.

Grâce au procédé de l'invention, la fabrication d'un organe comprenant au moins un composant électronique enrobé de gomme est simple, rapide et peu coûteuse. En effet, des bandes de gomme peuvent être fabriquées simplement par exemple au moyen d'une extrudeuse. Ensuite, il suffit d'intercaler un ou plusieurs composants électroniques entre deux bandes de gomme pour les enrober totalement. Grâce à la forme générale allongée des bandes de gomme, il est possible de les faire défiler toutes les deux à une même vitesse sensiblement constante et de les réunir en une seconde zone pour enrober les composants que l'on aura préalablement déposés dans la première zone.

De préférence, la première bande de gomme est placée sensiblement à l'horizontal et le composant électronique est déposé sur la face supérieure de cette première bande. Ensuite, la seconde bande est déposée par-dessus la face supérieure de la première bande de manière à recouvrir le composant. Bien entendu, il est également possible de déposer le composant électronique sur la surface inférieure de la première bande de gomme, la fixation du composant sur la bande étant obtenue grâce aux propriétés adhésives de !a gomme. Par la suite, on dépose l'ensemble de la première bande et du composant sur une seconde bande de gomme de manière à enrober le composant.

Le procédé selon l'invention peut en outre comporter l'une ou plusieurs des caractéristiques suivantes.
- On découpe simultanément les deux bandes transversalement après que le composant a été enrobé. Cette manière de procéder permet de faciliter la fabrication et d'augmenter sa productivité. En effet, cela permet de déposer une pluralité de composants électroniques le long de la première bande de gomme, en les espaçant régulièrement, puis d'enrober tous les composants en une seule opération à l'aide d'une seconde bande de gomme. Ensuite, il suffit de couper transversalement les deux bandes de gomme entre deux composants électroniques voisins pour diviser ces bandes de gomme en une pluralité d'organes.
- On dépose, à intervalles réguliers, au moins un composant sur ladite face de l'une des bandes, en une zone de pose prédéterminée située dans la première zone. Etant donné que les bandes défilent, il est possible de déposer à intervalles réguliers des composants en une zone prédéterminée et fixe. Du fait que la zone de dépose est fixe, cela simplifie l'étape de dépose qui peut être ainsi automatisée.
- On dépose le composant à une vitesse sensiblement identique et parallèle à celle de défilement de la bande. Cela permet que la vitesse relative du composant par rapport à la première bande soit sensiblement nulle lors de la pose du composant. Ainsi, cela réduit le risque que cette étape de pose endommage le composant électronique ou la bande de gomme du fait d'un choc dû à un différentiel de vitesse.

L'invention a également pour objet une installation, selon la revendication 6, de fabrication d'au moins un organe comprenant au moins un composant électronique enrobé de gomme, comprenant :
- des moyens de défilement des deux bandes de gomme agencés pour faire défiler des bandes depuis une première zone dans laquelle elles sont disjointes vers une seconde zone dans laquelle deux faces respectives des deux bandes sont en contact l'une avec l'autre,
- des moyens de pose du composant sur ladite face de l'une des bandes de gomme, en une zone de pose prédéterminée située dans la première zone,
- des moyens d'alimentation en composants des moyens de pose,
- les moyens de pose comprennent un convoyeur agencé pour transporter un composant depuis les moyens d'alimentation vers la zone de pose,
- les moyens d'alimentation comprennent un barillet agencé entre les moyens de pose et des moyens de stockage de composants.

Cette installation est adaptée à la mise en oeuvre du procédé défini précédemment.

L'installation selon l'invention peut en outre comprendre l'une ou plusieurs des caractéristiques suivantes.
- De préférence, le convoyage est réalisé à une vitesse sensiblement identique à la vitesse de défilement de la bande de gomme. Ce convoyeur peut être par exemple une courroie crantée s'étendant depuis les moyens d'alimentation vers la zone de pose. De préférence, la direction de convoyage est sensiblement parallèle à la direction de défilement de la bande de gomme au niveau de la zone de pose prédéterminée.
- Les moyens de stockage permettent le stockage de composants en vue de la fabrication des organes. Le barillet permet d'extraire les composants des moyens de stockage et de les présenter aux moyens de pose afin d'être déposés sur la bande de gomme.
- Les moyens d'alimentation comprennent des moyens de déplacement en translation du barillet entre les moyens de pose et les moyens de stockage et des moyens de rotation du barillet.
- Le barillet comprend des moyens magnétiques de maintien des composants sur sa surface externe. Ainsi, les moyens mécaniques permettent d'assurer un maintien d'un composant initialement stocké dans les moyens de stockage sur la surface externe du barillet. Ensuite, une rotation du barillet grâce aux moyens de rotation permet de déplacer le composant depuis les moyens de stockage vers les moyens de pose. La désactivation des moyens magnétiques permet alors de libérer le composant électronique du barillet vers les moyens de pose.
- Le barillet comprend une pluralité de logements axiaux pour composants, ménagés sur la surface externe du barillet.
- Les logements axiaux comprennent une rainure de la surface du barillet, débouchant sur une face du barillet.

L'invention sera mieux comprise à la lecture de la description qui va suivre, donnée uniquement à titre d'exemple et faite en se référant aux figures annexées dans lesquelles :
- la figure 1 est une vue en perspective d'un composant électronique,
- les figures 2 et 3 sont des vues en perspective de deux variantes de moyens de stockage de composants électroniques,
- la figure 4 est une vue en perspective d'une installation selon l'invention,
- la figure 5 est une vue en coupe de l'installation de la figure 4,
- les figures 6 à 9 sont des vues en coupe de l'installation de la figure 4 et du barillet de cette installation, au cours de quatre étapes du procédé de l'invention.

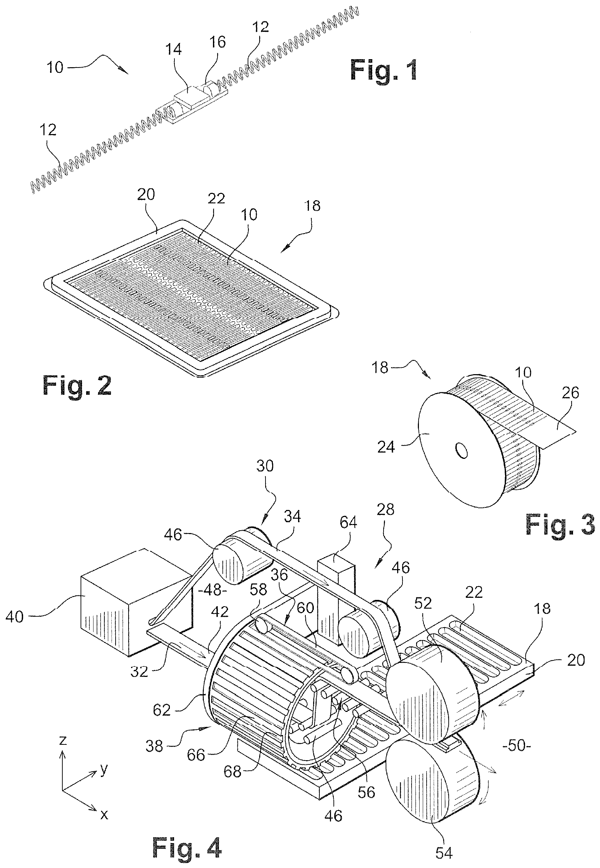

On a représenté sur la figure 1 un composant électronique, désigné par la référence générale 10 et destiné à être enrobé de gomme de manière à former un organe. Dans l'exemple représenté, le composant électronique 10 est de type RFID et comprend deux antennes 12 reliées à une puce 14 montée sur une platine 16. D'autres types de composants électroniques peuvent être utilisés.

Une fois fabriqués, les composants électroniques 10 sont conditionnés dans des moyens de stockage 18 dont trois variantes sont représentées sur les figures 2, 3 et 4.

Selon une première variante représentée sur la figure 2, les moyens de stockage 18 comprennent un plateau thermoformé 20 comprenant deux rangées d'alvéoles 22 parallèles dans lesquelles sont stockés les composants électroniques 10.

Selon une seconde variante représentée sur la figure 3, les moyens de stockage 18 comprennent une bobine 24 sur laquelle est enroulé un support souple 26 en forme de ruban. Les composants électroniques 10 sont disposés les uns à côté des autres sur le ruban 26.

Enfin, selon une troisième variante représentée sur la figure 4, les moyens de stockage 18 comprennent un plateau thermoformé 20 semblable à celui de la première variante mais ne comprenant qu'une rangée d'alvéoles 22 destinées au stockage des composants électroniques 10.

On a représenté sur la figure 4 une installation 28 selon l'invention, pour la fabrication d'organes comprenant chacun au moins un composant électronique 10 enrobé de gomme.

L'installation 28 comprend :
- les moyens 18 de stockage d'organes 10 comprenant le plateau thermoformé 20,
- des moyens 40 de génération de deux bandes de gomme inférieure 32 et supérieure 34, par exemple une extrudeuse 40,
- des moyens 30 de défilement des deux bandes de gomme 32 et 34,
- des moyens 36 de pose de composants électroniques 10 sur la bande inférieure 32,
- des moyens 38 d'alimentation en composants 10 des moyens de pose 36.

Pour décrire les différents éléments composant l'installation 28, on définit un repère orthonormé XYZ dont la direction Z est verticale, orientée vers le haut.

Le plateau 20 des moyens de stockage 18 s'étend dans le plan X-Y et présente une forme sensiblement rectangulaire dont la longueur s'étend selon la direction Y. Le plateau 20 est donc sensiblement horizontal. Les alvéoles 22 formées par des rainures de la surface du plateau 20 présente une forme allongée s'étendant transversalement au plateau 20, c'est-à-dire selon la direction X.

Le plateau 20 est mobile en translation selon la direction Y de manière à pouvoir modifier sa position par rapport aux moyens d'alimentation 38.

Une fois générées grâce à l'extrudeuse, les bandes 32 et 34 sont guidées par les moyens 30 de défilement et suivent chacune un trajet différent. Les trajets des deux bandes 32 et 34 sont tels qu'elles occupent sensiblement un même plan vertical défini par les directions X et Z.

La bande inférieure 32 est située tout au long de son trajet sous la bande supérieure 34 et comprend une face supérieure 42 orientée en regard d'une face inférieure 44 de la bande supérieure 34.

Les moyens 30 de défilement comprennent un ensemble de rouleaux d'entraînement 46 agencés de manière à faire défiler les bandes 32 et 34 depuis une première zone 48, située en sortie de l'extrudeuse 40, dans laquelle les deux bandes 32 et 34 sont disjointes, vers une seconde zone 50 dans laquelle les deux faces 42 et 44 respectives des deux bandes 32 et 34 sont en contact l'une avec l'autre.

En particulier, les moyens de défilement 30 comprennent deux rouleaux d'entraînement terminaux 52 et 54 tournant en sens inverse l'un sur l'autre et entre lesquels défilent les deux bandes 32 et 34 en contact l'une avec l'autre. Ces deux rouleaux 52 et 54 roulent l'un sur l'autre et permettent de presser les deux bandes 32 et 34 l'une contre l'autre à l'entrée de la seconde zone 50.

La vitesse des rouleaux 46, 52 et 54 des moyens de défilement 30 est contrôlée de sorte que les deux bandes 32 et 34 défilent sensiblement à une même vitesse sensiblement constante.

Les rouleaux d'entraînement 46 de la bande inférieure 32 sont agencés de manière à ce que la seconde bande 32 soit sensiblement horizontale au niveau d'une zone de pose 56 prédéterminée située dans la première zone 48 dans laquelle les deux bandes 32 et 34 sont disjointes. Au niveau de cette zone de pose 56, les rouleaux d'entraînement 46 de la bande inférieure 32 sont localisés en dessous de la bande de sorte que sa face supérieure 42 est libre.

Les moyens 36 de pose des composants 10 sur la face 42 de la bande inférieure 32 comprennent deux poulies d'entraînement 58 et une courroie crantée 60 enroulée autour des deux poulies 58. On définit un brin supérieur 61 de la courroie 60 et un brin inférieur 63 de la courroie 60. Les axes de rotation des deux poulies 58 sont sensiblement parallèles à la direction Y et sont contenus dans un même plan X-Y. De plus, le diamètre des deux poulies 58 est identique. Ainsi, les deux brins 61 et 63 sont sensiblement parallèles et horizontaux et défilent dans deux directions opposées parallèles à la direction X.

Le sens de rotation des poulies 58 est déterminé pour que le brin inférieur 63 de la courroie 36 défile dans le même sens, et sensiblement à la même vitesse, que la bande inférieure 32 au niveau de la zone de pose 56.

Enfin, les moyens de pose 36 sont agencés pour que la partie aval (par rapport au sens de défilement) du brin inférieur 63 de la courroie 60 soit au moins partiellement en regard de la face supérieure 42 de la bande 32 au niveau de la zone de pose 56. Au niveau du chevauchement de la courroie et de la bande, l'écart entre la courroie et la bande est déterminé de manière à être sensiblement égal à l'épaisseur du composant électronique 10.

La partie amont du brin inférieur 63 est en regard des moyens 38 d'alimentation en composants 10.

Ainsi, le brin inférieur 63 de la courroie 60 forme un convoyeur depuis les moyens 38 d'alimentation vers la zone de pose 56.

Les moyens 38 d'alimentation comprennent un barillet 62 de forme générale cylindrique d'axe horizontal orienté selon la direction X, c'est-à-dire sensiblement parallèle à la direction de défilement de la bande 32 au niveau de la zone de pose 56.

Le barillet 62 a une forme de tube creux de manière à ce que la bande inférieure 32 puisse défiler à l'intérieur du barillet.

Les moyens d'alimentation 38 comprennent en outre un support 64 du barillet 62. Le support 64 est monté mobile en translation selon une direction verticale Z par rapport à un référentiel terrestre, et des moyens (non représentés) de déplacement en translation du support 64 sont prévus. Le barillet 62 est monté mobile en rotation autour de son axe X par rapport au support 64, et des moyens de rotation (non représentés) du barillet sont prévus.

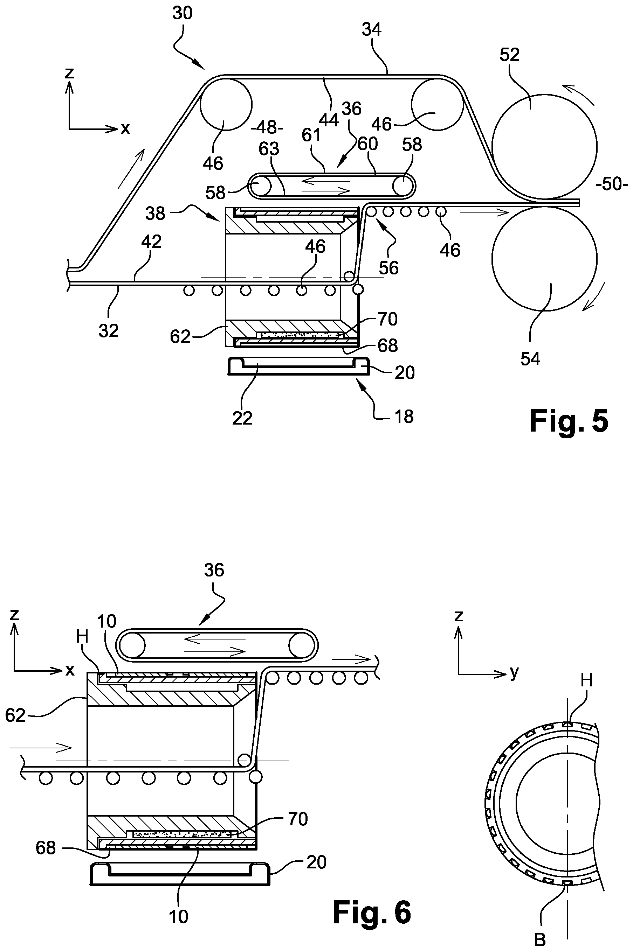

Le barillet 62 comprend une surface externe 66 de forme sensiblement cylindrique et comprenant une pluralité de rainures 68 formant des logements pour les composants électroniques 10 et régulièrement réparties autour du barillet. Les rainures 68 sont orientées selon l'axe X du barillet et sont débouchantes vers la direction X, comme représenté sur les figures 4 et 5.

Le barillet 62 comprend en outre, au fond de chaque rainure 68, des moyens 70 magnétiques activables ou désactivables pour maintenir un composant électronique 10 dans la rainure 68.

A un instant donné, le barillet 62 comprend une rainure H située en haut et une rainure B située en bas. Les deux rainures H et B sont diamétralement opposées et comprises dans un plan axial du barillet et sensiblement vertical, c'est-à-dire dans un plan parallèle au plan X-Z.

Le barillet 62 et les moyens de stockage 18 sont agencés l'un par rapport à l'autre de sorte que la partie inférieure de la surface du barillet 62 fait face à la surface supérieure des moyens de stockage 18. Ainsi, la rainure B est en regard d'une alvéole 22 des moyens de stockage 18.

Par ailleurs, le barillet 62 est agencé de sorte que la rainure H située en partie supérieure du barillet 62 est en regard du brin inférieur 63 de la courroie crantée 60 des moyens de pose 36.

La distance séparant le brin inférieur 63 de la courroie 60 et la surface supérieure du plateau 20 des moyens 18 de stockage est légèrement supérieure au diamètre du barillet 62.

Le procédé de fabrication selon l'invention mis en oeuvre au moyen de l'installation 28 va maintenant être décrit en référence aux figures 6 à 9. Ces quatre figures représentent chacune d'une part une vue en coupe dans le plan X-Y de l'installation, c'est-à-dire en coupe axiale par rapport au barillet, et d'autre part une vue en coupe dans le plan Y-Z du barillet 62, c'est-à-dire en coupe radiale.

Lors de la mise en oeuvre du procédé, les deux bandes 32 et 34 et la courroie 36 défilent à une vitesse sensiblement constante et identique.

Au cours d'une première étape représentée sur la figure 6, la position verticale du barillet 62 est telle qu'il est situé sensiblement à mi-chemin entre le brin inférieur 63 et la face supérieure du plateau 20. Comme cela est visible sur la coupe radiale du barillet, la moitié des logements formés par les rainures du barillet comprennent un composant électronique 10 maintenu grâce aux moyens magnétiques 70. En particulier, la rainure supérieure H et la rainure inférieure B comprennent chacune un composant électronique 10.

Au cours d'une étape suivante, les moyens de translation du support 64 agissent de manière à déplacer le barillet 62 vers le haut jusqu'à ce que le composant électronique 10 situé dans la rainure supérieure du barillet entre en contact avec le brin inférieur 63. Dans cette configuration, la rainure supérieure H est sensiblement dans le prolongement de la bande inférieure 32 au niveau de la zone de pose 56.

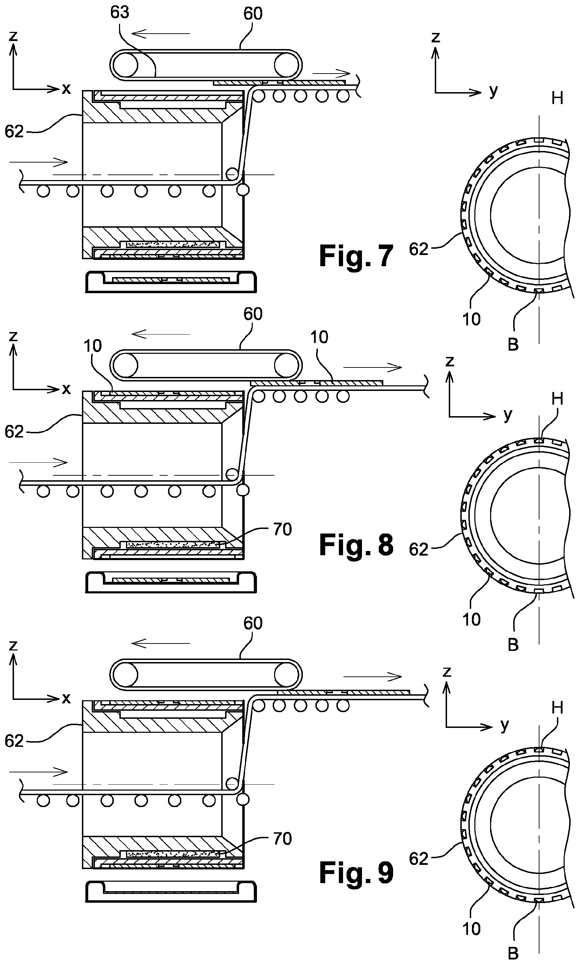

Ensuite, les moyens magnétiques de maintien du composant électronique 10 de la rainure supérieure H sont désactivés de manière à le libérer. Alors, comme représenté sur la figure 7, sous l'effet du mouvement de la courroie crantée 60 qui vient en contact avec le composant 10, ledit composant électronique supérieur 10 est entraîné à une vitesse sensiblement identique à la vitesse de déplacement de la bande 32 au niveau de la zone 56, ce qui provoque son dépôt sur la face supérieure 42 de la bande 32. On constate alors sur la coupe radiale du barillet de la figure 7 que la rainure supérieure H est désormais vide.

Au cours d'une étape suivante, le plateau 20 est déplacé en translation selon la direction Y de manière à présenter en face de la rainure inférieure B du barillet une alvéole remplie d'un composant électronique.

Au cours d'une étape suivante, les moyens de déplacement vertical du support 64 du barillet 62 agissent pour déplacer vers le bas le barillet. Puis, les moyens de rotation du barillet agissent pour faire tourner le barillet 62 d'un angle égal à l'écart angulaire séparant deux rainures voisines. Il est également possible d'effectuer le mouvement de descente et de rotation de manière simultanée dans le but de réduire le temps de cycle. Comme représenté sur la coupe radiale du barillet de la figure 8, la rainure supérieure H du barillet est désormais remplie par un composant électronique. En revanche, la rainure inférieure B est désormais vide du fait de la rotation du barillet.

Puis, comme représenté sur la figure 9, le barillet est déplacé verticalement vers le bas jusqu'à ce que sa rainure inférieure B soit proche de l'alvéole remplie du plateau 20. Sous l'effet des moyens magnétiques, le composant électronique 10 est alors transféré depuis l'alvéole du plateau 20 vers la rainure inférieure B du barillet. Ainsi, comme représenté sur la coupe radiale du barillet de la figure 9, la rainure inférieure B est remplie par un composant électronique 10.

Ensuite, le barillet est de nouveau déplacé selon une translation verticale vers le haut jusqu'à occuper la position représentée sur la figure 6.

Les étapes qui viennent d'être décrites sont alors réitérées de manière à permettre le dépôt, à intervalles réguliers, de composants sur la face supérieure 42 de la bande 32 au niveau de la zone de pose 56.

L'étape de recouvrement des composants électroniques par la seconde bande 34 est mise en oeuvre grâce aux deux rouleaux 54 et 52 au niveau de la seconde zone 50, comme cela est représenté sur la figure 4.

Une étape suivante de découpe transversale des deux bandes 32 et 34 est ensuite mise en oeuvre à intervalle régulier, sensiblement égal à l'intervalle séparant deux dépôts successifs de composants sur la face supérieure 42 de la bande 32.

Le procédé et l'installation qui viennent d'être décrits permettent donc de fabriquer de manière simple un organe comprenant un composant électronique enrobé de gomme.

## Revendications

1. Procédé de fabrication d'au moins un organe de pneumatique, destiné à être noyé dans un pneumatique ou solidarisé avec sa surface, cet organe comprenant au moins un composant électronique (10) enrobé de gomme, procédé dans lequel on met le composant (10) en contact avec une première bande (32) de gomme et on le recouvre par une seconde bande (34) de gomme de manière à enrober le composant (10), **caractérisé en ce que** les deux bandes (32, 34) défilent sensiblement à une même vitesse depuis une première zone (48) dans laquelle les deux bandes sont disjointes vers une seconde zone (50) dans laquelle deux faces (42, 44) respectives des deux bandes (32, 34) sont en contact l'une avec l'autre.

2. Procédé selon la revendication 1, dans lequel la constante diélectrique de la gomme utilisée pour enrober le composant est inférieure à 3 dans la gamme des fréquences supérieures à 300 MHz.

3. Procédé selon l'une quelconque des revendications précédentes, dans lequel on découpe simultanément les deux bandes (32, 34) transversalement après que le composant (10) a été enrobé.

4. Procédé selon l'une quelconque des revendications précédentes, dans lequel on dépose, à intervalles réguliers, au moins un composant (10) sur ladite face (42, 44) de l'une des bandes (32, 34), en une zone (56) de pose prédéterminée située dans la première zone (48).

5. Procédé selon l'une quelconque des revendications précédentes, dans lequel on dépose le composant (10) à une vitesse sensiblement identique et parallèle à celle de défilement de la bande (32).

6. Installation (28) de fabrication d'au moins un organe de pneumatique, destiné à être noyé dans un pneumatique ou solidarisé avec sa surface, cet organe comprenant au moins un composant électronique (10) enrobé de gomme, comprenant:
- des moyens (30) de défilement de deux bandes (32, 34) de gomme agencés pour faire défiler les bandes (32, 34) depuis une première zone (48) dans laquelle elles sont disjointes vers une seconde zone (50) dans laquelle deux faces (42, 44) respectives des deux bandes (32, 34) sont en contact l'une avec l'autre,
- des moyens (36, 58, 60) de pose du composant (10) sur ladite face (42) de l'une des bandes de gomme (32), en une zone (56) de pose prédéterminée située dans la première zone (48),
- des moyens d'alimentation (38) en composants (10) des moyens de pose (36, 58, 60),
- installation dans laquelle les moyens de pose (36, 58, 60) comprennent un convoyeur (58, 60) agencé pour transporter un composant (10) depuis les moyens d'alimentation (38) vers la zone de pose (56), et dans laquelle les moyens d'alimentation (38) comprennent un barillet (62) agencé entre les moyens de pose (36, 58, 60) et des moyens de stockage (18, 20) de composants (10).

7. Installation (28) selon la revendication précédente, dans laquelle les moyens d'alimentation (38) comprennent des moyens de déplacement en translation du barillet (62) entre les moyens de pose (36, 58, 60) et les moyens de stockage (18, 20), et des moyens de rotation du barillet (62).

8. Installation (28) selon la revendication 6 ou 7, dans laquelle le barillet (62) comprend des moyens magnétiques (70) de maintien des composants (10) sur sa surface externe.

9. Installation (28) selon l'un quelconque des revendications 6 à 8, dans laquelle le barillet (62) comprend une pluralité de logements axiaux (68) pour composants (10), ménagés sur la surface externe du barillet (62).

10. Installation (28) selon la revendication précédente, dans laquelle les logements axiaux (68) comprennent une rainure (68) de la surface du barillet (62), débouchant sur une face du barillet (62).

## Patentansprüche

1. Verfahren zur Herstellung mindestens eines Reifenelements, das dazu bestimmt ist, in einen Reifen eingelassen oder mit seiner Oberfläche verbunden zu werden, wobei diese Element mindestens eine elektronische Komponente (10), die mit Gummi umhüllt ist, umfasst, wobei bei dem Verfahren die Komponente (10) mit einem ersten Gummiband (32) in Kontakt gebracht und mit einem zweiten Gummiband (34) bedeckt wird, um die Komponente (10) zu umhüllen, **dadurch gekennzeichnet, dass** die zwei Bänder (32, 34) mit einer selben Geschwindigkeit von einer ersten Zone (48), in der die zwei Bänder getrennt sind, zu einer zweiten Zone (50), in der die zwei jeweiligen Flächen (42, 44) der zwei Bänder (32, 34) miteinander in Kontakt sind, ablaufen.

2. Verfahren nach Anspruch 1, bei dem die dielektrische Konstante des Gummis, der verwendet wird, um die Komponente zu umhüllen, kleiner als 3 in dem Bereich der Frequenzen über 300 MHz ist.

3. Verfahren nach einem der vorhergehenden Ansprüche, bei dem gleichzeitig beide Bänder (32, 34) quer abgeschnitten werden, nachdem die Komponenten (10) umhüllt wurde.

4. Verfahren nach einem der vorhergehenden Ansprüche, bei dem in regelmäßigen Abständen mindestens eine Komponente (10) auf die Fläche (42, 44) eines der Bänder (32, 34) in einer vorbestimmten Aufbringzone (56), die sich in der ersten Zone (48) befindet, aufgebracht wird.

5. Verfahren nach einem der vorhergehenden Ansprüche, bei dem die Komponente (10) mit einer Geschwindigkeit im Wesentlichen identisch und parallel zu jener des Ablaufens des Bandes (32) aufgebracht wird.

6. Anlage (28) zur Herstellung mindestens eines Reifenelements, das dazu bestimmt ist, in einen Reifen eingelassen oder mit seiner Oberfläche verbunden zu werden, wobei dieses Element mindestens eine elektronische Komponente (10), die mit Gummi umhüllt ist, umfasst, umfassend:
- Ablaufmittel (30) der zwei Gummibänder (32, 34), die dazu vorgesehen sind, die Bänder (32, 34) von einer ersten Zone (48), in der sie getrennt sind, zu einer zweiten Zone (50), in der die zwei jeweiligen Flächen (42, 44) der zwei Bänder (32, 34) miteinander in Kontakt sind, ablaufen zu lassen,
- Mittel (36, 58, 60) zum Aufbringen der Komponente (10) auf die Fläche (42) eines der Gummibänder (32) in einer vorbestimmten Aufbringzone (56), die sich in der ersten Zone (48) befindet,
- Mittel (38) zur Versorgung der Aufbringmittel (36, 58, 60) mit Komponenten (10),
- wobei bei der Anlage die Aufbringmittel (36, 58, 60) einen Förderer (58, 60) umfassen, der dazu vorgesehen ist, eine Komponente (10) von den Versorgungsmitteln (38) zu der Aufbringzone (56) zu transportieren, und bei der die Versorgungsmittel (38) eine Trommel (62) umfassen, die zwischen den Aufbringmitteln (36, 58, 60) und Mitteln (18, 20) zur Lagerung von Komponenten (10) angeordnet ist.

7. Anlage (28) nach dem vorhergehenden Anspruch, bei der die Versorgungsmittel (38) Mittel zur Translationsverschiebung der Trommel (62) zwischen den Aufbringmitteln (36, 58, 60) und den Lagermitteln (18, 20) und Rotationsmittel der Trommel (62) umfassen.

8. Anlage (28) nach Anspruch 6 oder 7, bei der die Trommel (62) magnetische Haltemittel (70) der Komponenten (10) auf ihrer Außenfläche umfasst.

9. Anlage (28) nach einem der Ansprüche 6 bis 8, bei der die Trommel (62) eine Vielzahl von Axialaufnahmen (68) für Komponenten (10) umfasst, die auf der Außenfläche der Trommel (62) vorgesehen sind.

10. Anlage (28) nach dem vorhergehenden Anspruch, bei der die Axialaufnahmen (68) eine Nut (68) der Oberfläche der Trommel (62) umfassen, die auf einer Seite der Trommel (62) mündet.

## Claims

1. A method of manufacturing at least one tire member, destined to be embedded in a tire or joined with its surface, the member comprising at least one rubber-coated electronic component (10), **characterized in that** the component (10) is brought into contact with a first strip (32) of rubber and is covered by a second strip (34) of rubber so as to coat the component (10), and **in that** the two strips (32, 34) move substantially at the same speed from a first zone (48) in which the two strips are separated toward a second zone (50) in which two respective faces (42,44) of the two strips (32,34) are in contact with each other.

2. A method according to claim 1, wherein the dielectric constant of the rubber used to coat the component is less than 3 in the range of frequencies greater than 300 MHz.

3. A method according to any one of the preceding claims, wherein the two strips (32, 34) are cut simultaneously transversely after the component (10) has been coated.

4. A method according to any one of the preceding claims, wherein at least one component (10) is deposited at regular intervals on said face (42, 44) of one of the strips (32, 34) at a predetermined seating area (56) in the first zone (48).

5. A method according to any one of the preceding claims, wherein the component (10) is deposited at a substantially identical speed as and parallel to the movement of the strip (32).

6. An installation (28) for manufacturing at least one tire member, destined to be embedded in a tire or joined with its surface, the member comprising at least one rubber-coated electronic component (10), **characterized in that** the installation comprises:
- means (30) for moving two strips of rubber (32, 34) arranged to cause the strips (32, 34) to run from a first zone (48) in which the strips are separated to a second zone (50) wherein two respective faces (42, 44) of the two rubber strips (32, 34) are in contact with one another,
- placement means (36, 58, 60) for placing the component on one of the respective faces (42) of one of the two rubber strips (32), in a predetermined seating area (56) situated in the first zone (48),
- feeding means (38) for feeding the components (10) to the placement means (36, 58, 60),
- the installation in which the placement means (36, 58, 60) comprise a conveyor (58, 60) arranged to transport a component (10) from the feeding means (38) to the seating area (56), and in which the feeding means (38) comprise a drum (62) arranged between the placement means (36, 58, 60) and storage means (18, 20) for storing the components (10).

7. An installation (28) according to the preceding claim, wherein the feeding means (38) comprises translation means for moving the drum (62) between the placement means (36, 58, 60) and the storage means (18, 20), and means for rotating the drum (62).

8. An installation (28) according to claim 6 or 7, wherein the drum (62) comprises magnetic means (70) for holding the electronic components (10) on an external drum surface.

9. An installation (28) according to any one of claims 6 to 8, wherein the drum (62) comprises a plurality of axial housings (68) for the components (10) formed on the outer surface of the barrel (62).

10. An installation (28) according to the preceding claim, wherein the axial housings (68) comprise a groove (68) on the surface of the drum (62), opening on one side of the drum (62).
